# EUROPÄISCHE PATENTSCHRIFT

(11) **EP 1 200 745 B1**
(45) Veröffentlichungstag und Bekanntmachung des Hinweises auf die Patenterteilung: **26.11.2003**
(21) Anmeldenummer: 01936049.4
(22) Anmeldetag: 01.02.2001
(51) Int. Cl.: F16B 1/00

(54) **VORRICHTUNG ZUM VERSPANNENDEN VERBINDEN VON MIT ABSTAND ZUEINANDER LIEGENDEN BAUTEILEN**
DEVICE FOR CONNECTING COMPONENTS BY CLAMPING, SAID COMPONENTS BEING SITUATED AT A DISTANCE FROM ONE ANOTHER
DISPOSITIF POUR ASSEMBLER PAR SERRAGE DES COMPOSANTS ESPACES L'UN DE L'AUTRE

(30) Priorität: 03.02.2000 DE 10004697
(43) Veröffentlichungstag der Anmeldung: 02.05.2002
(73) Patentinhaber: Witte-Velbert GmbH & Co. KG, 42551 Velbert (DE)
(72) Erfinder: KRÜGER, Norbert, 45239 Essen (DE); RÜCKERT, Edvard, 42549 Velbert (DE)
(74) Vertreter: Grundmann, Dirk, Dr.
(86) Internationale Anmeldenummer: EP0101049
(87) Internationale Veröffentlichungsnummer: WO01057406

(56) Entgegenhaltungen:
- EP-A- 0 176 663
- DE-A- 3 822 622
- DE-U- 8 606 008
- US-A- 5 288 191

## Beschreibung

Die Erfindung betrifft eine Vorrichtung zum verspannenden Verbinden von mit Abstand zueinander liegenden Bauteilen mittels eines im Abstandsraum angeordneten Distanzstücks und eines die beiden Bauteile gegeneinander verspannenden Spannstücks, wobei die Befestigungsbetätigung des Spannstückes zunächst das Distanzstück von einer Beabstandungsstellung zu einer Anlagestellung zum zweiten Bauteil verlagert und nachfolgend die Vorrichtung mittels gegen die Wandung einer Einsteckhöhlung des ersten Bauteiles tretenden Spannelemente am ersten Bauteil festlegt.

Ein derartige Vorrichtung ist bekannt aus der EP 0 176 663.

Das dort in den Figuren 19 und 20 dargestellte Ausführungsbeispiel besitzt einen Dübel, welcher endseitig Spreizarme ausbildet, die auseinandertreten, wenn in das Innengewinde des Dübels eine das Spannstück ausbildende Schraube hineingedreht wird. Der Dübel besitzt ein linksgängiges Außengewinde. Auf diesem Außengewinde ist ein Distanzstück aufgeschraubt. Dieses Distanzstück besitzt einen Hals, der sich in reibschlüssiger Anlage an dem Gewindeschaft der Schraube anlegen kann. Wird die Schraube durch eine Öffnung des zweiten Bauteiles in das Distanzstück hineingesteckt und rechtsgängig gedreht, so dreht sich das Distanzstück gegenüber dem Gewinde und verlagert sich in Richtung auf das zweite Bauteil zu, bis es mit seiner Stirnseite dort in eine Anschlagsstellung tritt. Die Befestigungsschraube greift dann in das Innengewinde des Dübels ein und spreizt die Spreizelemente gegen die Innenwandung der Einsteckhöhlung.

Aus der Gebrauchsmusterschrift 86 06 008.2 ist ein Spreizdübel bekannt, welcher eine Spreizhülse ausbildet, die in ein Bohrloch hineingesteckt werden kann. Dort sitzt die Spreizhülse axial fixiert und reibschlüssig fest. Am einsteckseitigem Ende bildet die Spreizhülse Spreizarme aus, die radialauswärts gespreizt werden können, wenn ein von der Befestigungsschraube verlagerbarer Spreizkörper dort hineingezogen wird.

Der Erfindung liegt die Aufgabe zugrunde, eine gattungsgemäße Vorrichtung gebrauchsvorteilhaft weiterzubilden.

Gelöst wird die Aufgabe durch die in den Ansprüchen angegebene Erfindung. Der Anspruch 1 stellt insbesondere darauf ab, daß die Spreizelemente dem Distanzstück zugeordnet sind. Zufolge dieser Ausgestaltung werden die Spreizelemente beim Verlagern des Distanzstückes von der Beabstandungsstellung in die Anlagestellung mitgeschleppt. Erst wenn das Distanzstück die Anlagestellung am zweiten Bauteil erreicht hat, spreizen die Spreizelemente auseinander. In vorteilhafter Weise wird das die Spreizelemente ausbildende Teil des Distanzstükkes von einer Hülse ausgebildet. In diese Hülse kann der Spreizkörper eintreten. Die Hülsenverlagerung erfolgt durch Mitschleppen des Spreizkörpers beim Betätigen des Spannstückes. Die Hülse hat bevorzugt in Achsrichtung verlaufende Schlitze. Die Schlitzzwischenräume bilden die Spreizelemente aus. Als Spannstück wird bevorzugt eine Schraube verwendet. Es ist aber auch möglich, an Stelle der Schraube einen Niet zuverwenden, der mit entsprechendem Werkzeug durch Zug festgelegt werden kann. Das Distanzstück sitzt drehfest aber in Achsrichtung gleitverschieblich in der Einsteckhöhlung fest. Das Distanzstück kann in der obengenannten Art aus mehreren Einzelteilen bestehen. Es kann aber auch einteilig ausgebildet sein. Bevorzugt wird die einteilige Ausgestaltung von einer Spreizhülse gebildet. Die Einsteckhöhlung kann von einem fest mit dem ersten Bauteil verbundenen Rohrstück ausgebildet sein. Dieses Rohrstück kann aber auch von einer Einziehung im ersten Bauteil ausgebildet sein. In einer Weiterbildung der Erfindung kann auch vorgesehen sein, daß das Rohrstück die Innenverkleidung eines Bohrloches bildet. Es ist dann als Einsteckteil ausgebildet. Dann kann auch das Rohrstück aufspreizbar sein. Das Einsteckteil kann ferner radialauswärts ragende Zähne aufweisen, mit dem es im Bohrloch reibschlüssig, axial und drehfest stekken kann. Von der Einsteckhöhlung kann eine Nase radialeinwärts abragen. Diese kann in eine Nut der Hülse eingreifen, so daß hierdurch eine Drehsicherung gewährleistet ist. Auf ähnliche Weise kann eine Drehsicherung zwischen Hülse und Spreizkörper sichergestellt werden. Der Spreizkörper besitzt bevorzugt eine konische Spreizfläche, welche in Anlage tritt zu einer konischen Gegenfläche der Hülse. Der die Hülse mit dem Spreizkörper drehsichernde Stift kann auch den Spreizkörper an der Hülse fixieren. Das Gegengewinde der Spannschraube kann entweder von dem zweiten Bauteil oder von dem Spreizkörper ausgebildet sein. In einer Variante der Erfindung kann vorgesehen sein, daß das Distanzstück mit einem zweiten, dem ersten Spreizkörper gegenüberliegenden Spreizkörper in die Anlagestellung zum zweiten Bauteil tritt. Wird die Anlagestellung erreicht, kann sich der zweite Spreizkörper gegenüber der Hülse noch geringfügig verlagern, so daß das Festziehen des Spannkörpers eine Abstandsverminderung zufolge hat. Um eine derartige Abstandsverminderung beim Festziehen der Spannschraube zu ermöglichen, ist alternativ vorgesehen, daß sich das Distanzstück bei einer aufgebrachten Spannkraft verformen kann. Hierzu eignet sich die Ausbildung des Distanzstückes als Spannhülse. Zur axialen Fesselung der Spreizelemente in der Einsteckhülse kann vorgesehen sein, daß die zylindrische Hülsenaußenwandung umfangsgeriffelt ist. Um eine optimale Abspreizwirkung zu erzielen, kann ferner vorgesehen sein, daß zur Ausbildung der Spreizelemente von beiden Stirnseiten der Hülse Schlitze ausgehen. Die Schlitze reichen über die axiale Mitte der Hülse hinaus, so daß sie sich in Achsrichtung längenüberlappen.

Nachstehend werden Ausführungsbeispiele der Erfindung anhand beigefügter Zeichnungen erläutert. Es zeigen:
- Fig. 1: eine Explosionsdarstellung eines ersten Ausführungsbeispiel,
- Fig. 2: eine Schnittdarstellung des ersten Ausführungsbeispiels vor dem Eindrehen der Spannschraube,
- Fig. 3: eine um 90° gewendete Darstellung gemäß Fig. 2,
- Fig. 4: eine Darstellung gemäß Fig. 2 mit lose eingedrehter Schraube,
- Fig. 5: eine Folgedarstellung mit geringfügig angedrehter Schraube,
- Fig. 6: eine Folgedarstellung, bei welcher das Distanzstück bis in die Anlagestellung verlagert ist,
- Fig. 7: ein zweites Ausführungsbeispiel der Erfindung in Schnittdarstellung,
- Fig. 8: ein drittes Ausführungsbeispiel der Erfindung in Schnittdarstellung,
- Fig. 9: ein viertes Ausführungsbeispiel der Erfindung mit einem einteiligen Distanz- und Spreizelement,
- Fig. 10: ein fünftes Ausführungsbeispiel der Erfindung,
- Fig. 11: den Distanz- und Spreizkörper des fünften Ausführungsbeispiels,
- Fig. 12: ein sechstes Ausführungsbeispiel in Schnittdarstellung mit in Topfform ausgebildetem Spreizund Distanzstück,
- Fig. 13: das Spreiz- und Distanzstück des sechsten Ausführungsbeispiels in perspektivischer Darstellung und
- Fig. 14: ein siebtes Ausführungsbeispiel der Erfindung.

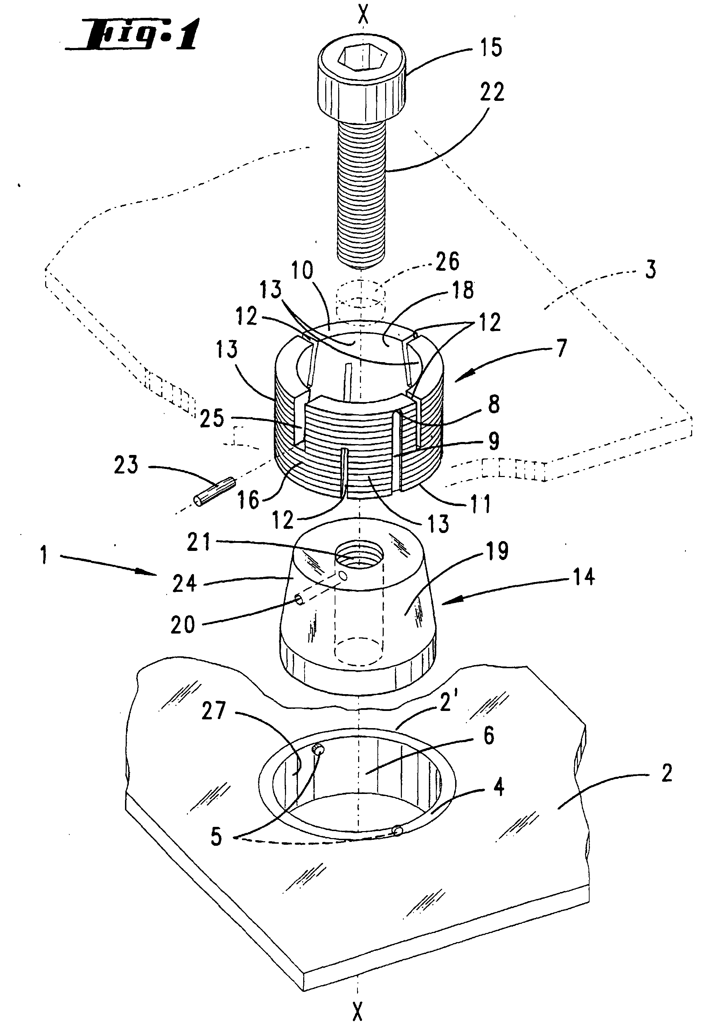

In Fig. 1 ist die Verbindungsvorrichtung mit der Bezugsziffer 1 bezeichnet und beinhaltet ein hülsenförmiges Distanzstück 7, einen Spreizkörper 14 und ein Spannstück 15. Das Spannstück 15 ist als Schraube ausgebildet. Das Gewinde 22 der Schraube kann in ein Innengewinde 21 des Spreizkörpers 14 eingeschraubt werden. Der Spreizkörper 14 besitzt eine konusförmige Mantelfläche 19 und hat insgesamt die Gestalt eines Kegelstumpfes mit spitzen Öffnungswinkel. Der Spreizkörper 14 ist dazu vorgesehen, mit seiner Konusfläche 19 in die Höhlung der Distanzhülse 7 eingesteckt zu werden. Die Höhlung der Distanzhülse 7 bildet eine konisch verlaufende Innenfläche 18 aus. Die Wandung der Hülse 7 ist mittels in Achsrichtung verlaufender Schlitze 12 geteilt. Die zwischen den Schlitzen 12 verbleibenden Bereiche bilden Spreizelemente 13 aus, die radialauswärts verlagert werden, wenn die Spreizkörper 14 in die Hülse hineingedrückt wird. Die Schlitze 12 münden in Einsteckrichtung des Spreizkörpers 14.

Es sind auch zur gegenüberliegenden Hülsenstirnseite sich öffnende Schlitze 12 vorgesehen. Insbesondere besitzt diese Stirnseite der Hülse 7 einen verbreiterten Schlitz 25. Dieser dient dazu, den in die Höhlung des Distanzstückes 7 lose eingesteckten Spreizkörper 14 unverlierbar mit der Distanzhülse 7 zu verbinden. An der entsprechenden Stelle der Mantelfläche 19 besitzt der Spreizkörper 14 eine Querbohrung 20. In diese Bohrung 20 wird durch den Schlitz 25 ein Stift 23 eingesteckt, so daß der Spreizkörper 14 nicht aus der Hülse 7 herausfallen kann.

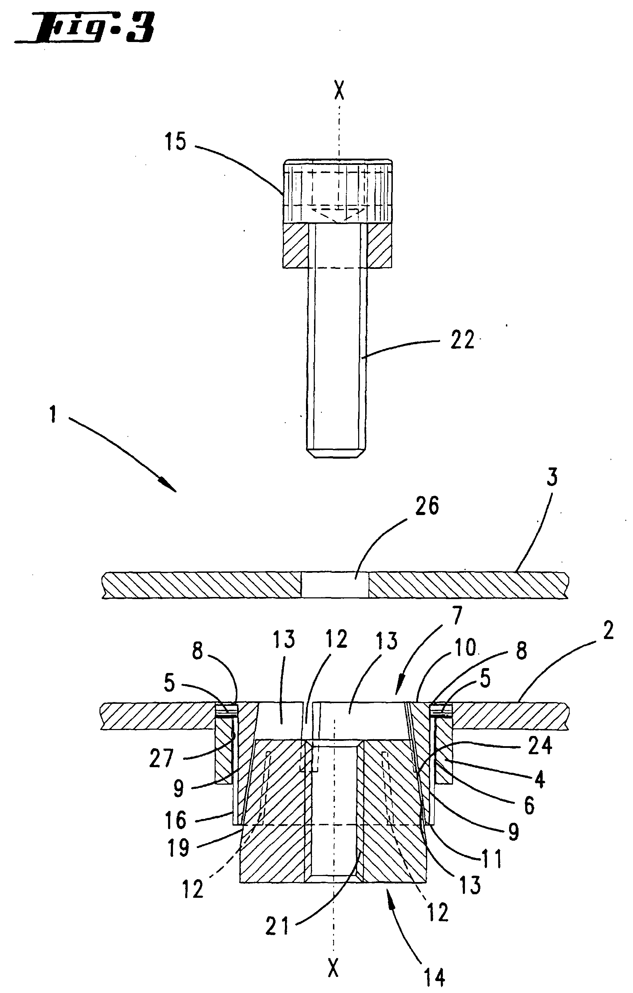

Die aus Spreizkörper 14 und Distanzstück 7 bestehende Baugruppe kann in eine Einsteckhöhle 6 des ersten Bauteiles eingesteckt werden. Die Umrißkontur der Einsteckhöhlung 6 entspricht der Außenumrißkontur des Distanzstückes 7. Insbesondere ist die Außenumrißkontur eine Kreisbogenlinie. Die Umrißkontur kann aber auch von der Kreisform abweichen. Um bei einer kreisförmigen Umrißkontur eine Drehsicherung der in der Einsteckhöhlung 6 einliegenden Distanzhülse zu gewährleisten, ragt zumindest eine Nase 5 aus der Mantelinnenfläche 27 der Einsteckhöhlung 6 heraus. Die Nase 5 greift in eine einendseitig geschlossene und anderendseitig offene Führungsnut des Distanzstückes 7 ein. Die geschlossene Seite der Führungsnut 9 bildet eine radiale Stützwandung 8 aus, mit der das Distanzstück 7 nach dem Einstecken in die Einsteckhöhlung 6 auf der Nase 5 lagert. Dies ist in Fig. 3 dargestellt.

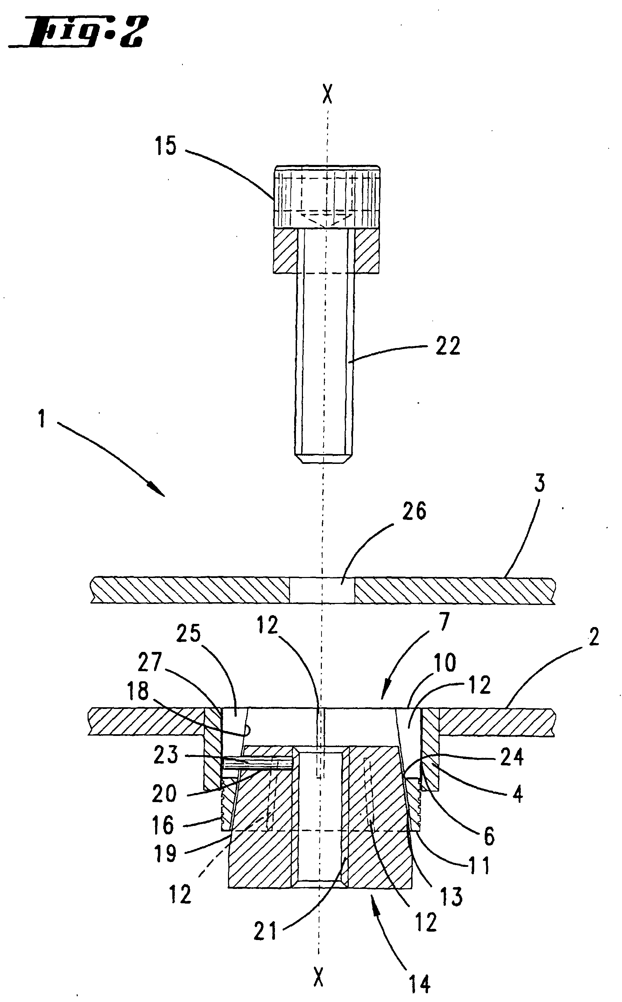

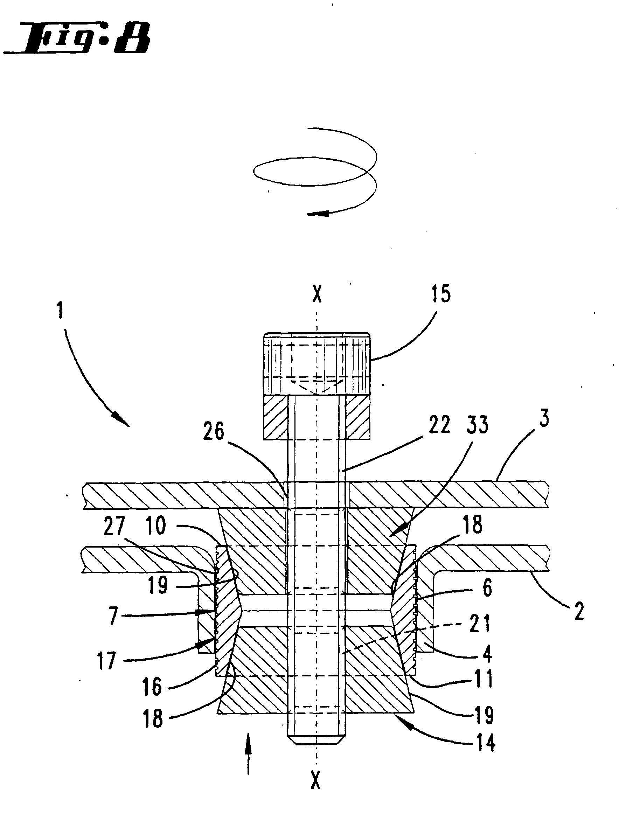

Die Einsteckhöhlung 6 kann von einem Rohrstück 4 ausgebildet werden, was in geeigneter Weise mit dem ersten Bauteil 2 verbunden ist. Bei dem ersten Bauteil 2 kann es sich um ein Blechstück handeln. Es ist aber auch vorgesehen, und in der Fig. 8 beispielhaft dargestellt, daß die Einsteckhöhlung 6 als rohrförmige Einziehung durch Verformen des Bleches gefertigt ist. Die beiden auf Abstand miteinander zu verbindenden Bauteile 2, 3 werden, wie in der Fig. 2 dargestellt, derart aneinander gebracht, daß die Durchgangsbohrung 26 des zweiten Bauteiles zentrisch liegt zur Einsteckhöhlung 6 und somit auch zentrisch liegt zum Innengewinde 21 des Spreizkörpers 14.

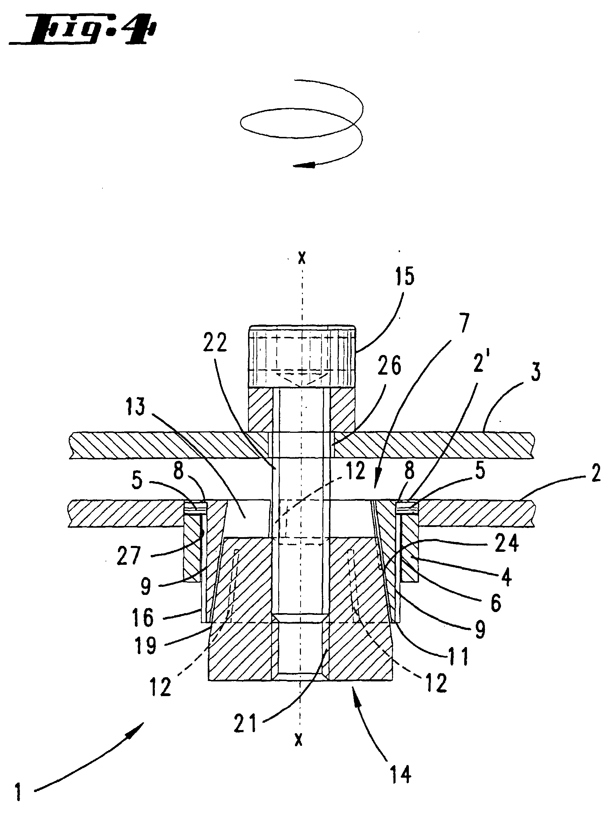

Ausgehend aus der in den Fig. 2 und 3 dargestellten Vormontagestellung wird sodann eine Schraube 15 durch die Durchgangsbohrung 6 hindurch gesteckt und mit ihrem Gewinde 22 in das Innengewinde 21 des Spreizkörpers 14 eingedreht, bis der Schraubenkopf bzw. ein den Schraubenkopf unterfütternder Ringgummipuffer in Anlage tritt zur Oberfläche des zweiten Bauteiles 3. Diese Stellung zeigt die Fig. 4.

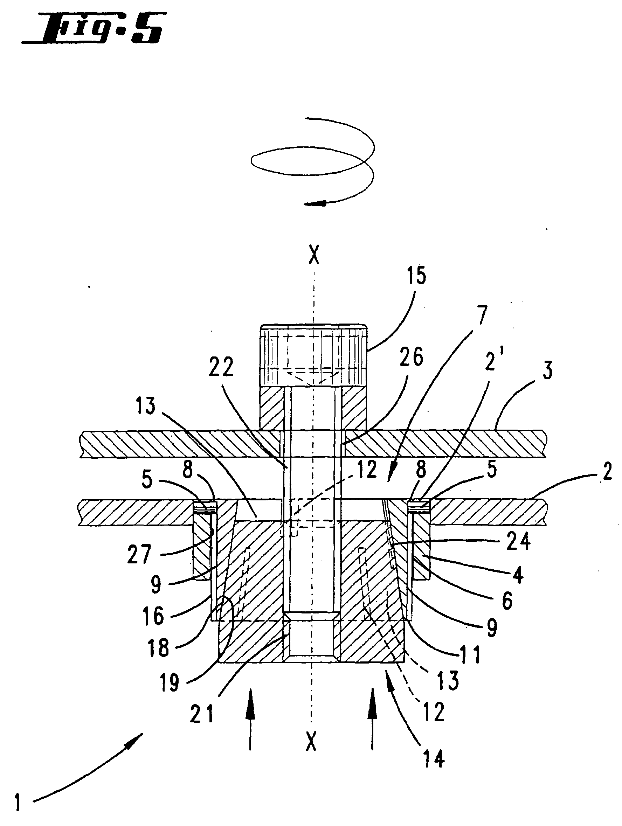

Wird dann die Schraube 15 weiter eingedreht, so verlagert sich der Spreizkörper 14 in Achsrichtung, bis seine Konusmantelfläche 19 gegen die konische Gegenfläche 18 des Distanzstückes tritt. Dies ist in Fig. 5 dargestellt.

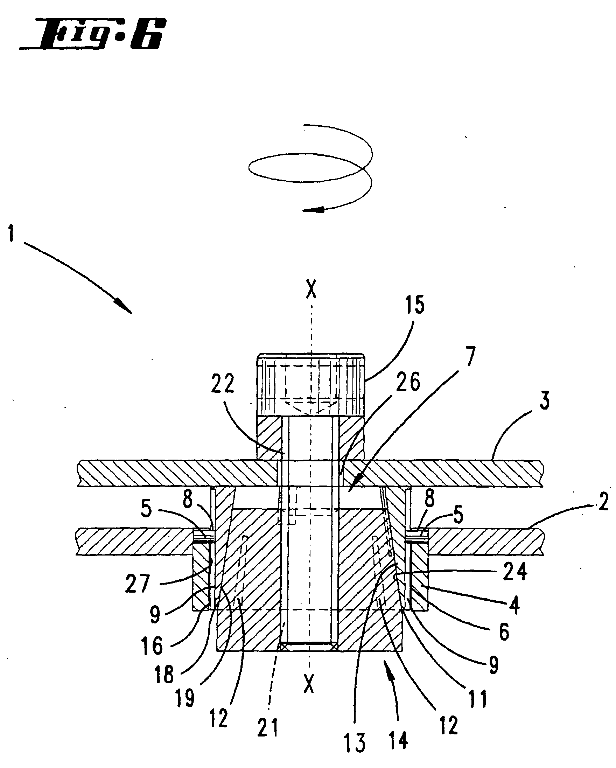

Eine weitere Drehverlagerung der Schraube 15 führt zu einer weiteren Axialverlagerung des Spreizkörpers 14. Dieser nimmt das Distanzstück mit, bis es mit seiner Stirnfläche 10 gegen das zweite Bauteil tritt (siehe Fig. 6). Ein weiteres Drehen der Schraube 15 führt zu einer weiteren Axialverlagerung des Spreizkörpers 14, jedoch ohne ein Mitschleppen des Distanzstückes 7. Die konische Mantelfläche 19 gleitet auf der konischen Gegenfläche 18 ab und führt dazu, daß die zwischen den Nuten 12 gebildeten Spreizelemente 13 radialauswärts gedrängt werden und in Druckanlage zur Innenfläche 27 der Einsteckhöhlung 6 treten. Im Ausführungsbeispiel besitzt die Außenwandung der Hülse 7 eine Riffelung 16, so daß ein verbesserter Reibschluß zur Innenmantelfläche 27 gegeben ist.

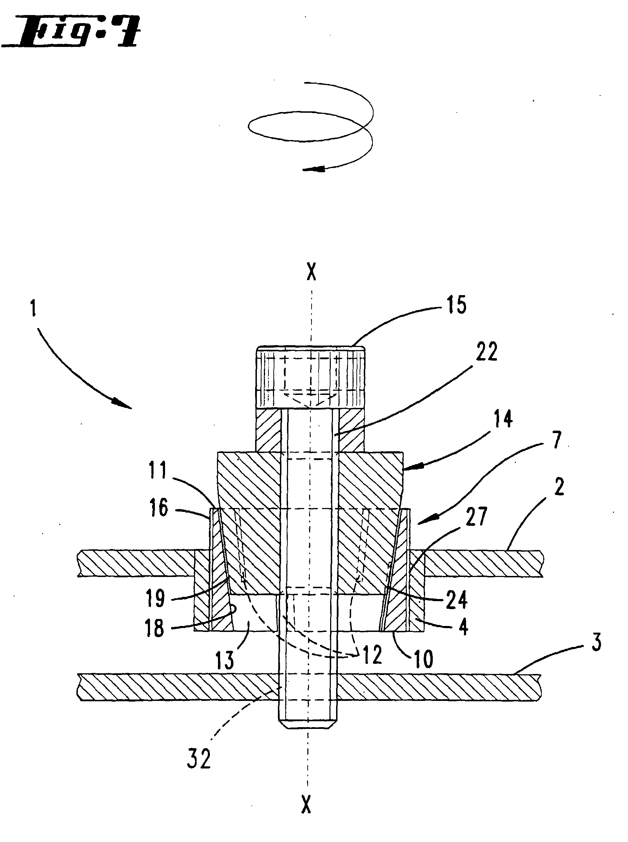

Das in Fig. 7 dargestellte Ausführungsbeispiel unterscheidet sich von dem zuvor erörterten Ausführungsbeispiel in wesentlichen darin, daß der Spreizkörper 14 eine Durchgangsbohrung und kein Innengewinde besitzt. Das zweite Bauteil 3 besitzt an Stelle der Durchgangsbohrung 26 ein Innengewinde 32. Beim in Fig. 7 dargestellten Ausführungsbeispiel verlagert sich der Schraubenkopf der Schraube 15 bei der Schraubbetätigung in Richtung des zweiten Bauteiles. Der Schraubenkopf 15 sitzt auf der Basisfläche des in der Distanzhülse 7 steckenden Spreizkörpers, welcher durch Drehen der Schraube 15 in Richtung auf das zweite Bauteil 3 unter Mitschleppen des Distanzstückes 7 verlagert wird, bis es die Stirnfläche 10 das zweite Bauteil 3 berührt.

Bei dem in Fig. 8 dargestelltem Ausführungsbeispiel besitzt die Distanzhülse 7 einen zweiten Spreizkörper 33. Dieser ist gegenüberliegend angeordnet zum ersten Spreizkörper 14 und zwar derart, daß die beiden konischen Mantelfläche spitzt gegeneinander gerichtet sind. Die Breitfläche des zweiten Spreizkörpers 33 weist auf das zweite Bauteil 3. Die Schraube 15 durchgreift eine Durchgangsbohrung des zweiten Spreizkörpers 33. Wird die Schraube 15 in den ersten Spreizkörper 14 eingedreht, so wird der zweite Spreizkörper 33 zunächst nicht mitverlagert. Die gesamte, aus den beiden Spreizkörper 14 und 33 und der Hülse 7 bestehende Baugruppe wird axial so weit verlagert, bis die Breitfläche des Spreizkörpers 33 in Anlage tritt zum zweiten Bauteil 3. Dann wird der erste Spreizkörper 14 unter Mitnahme der Distanzhülse 7 noch weiter verlagert, so daß sich der Abstand der beiden Breitflächen der Spreizkörper 14, 33 verringert. Indem der zweite Spreizkörper 33 bei der Spannbetätigung tiefer in die Hülse 7 eintaucht und dabei eine Spreizwirkung ausübt, verringert sich der Abstand der beiden Bauteil 2 und 3 zueinander.

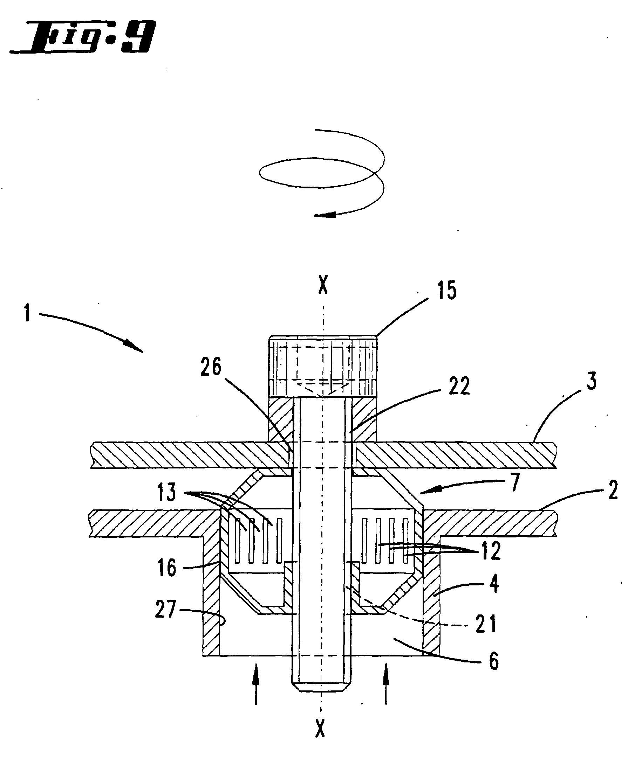

Bei dem in Fig. 9 dargestellten Ausführungsbeispiel ist das die Spreizwirkung und die Distanzierung bewirkende Element aus einem Teil geformt. Es handelt sich dabei um eine Spreizhülse. Diese Spreizhülse besteht aus einer Durchgangsöffnung die der oberen Stirnseite zugeordnet ist und einem Innengewinde 21, welches der gegenüberliegenden Stirnseite zugeordnet ist. Von den beiden Stirnseiten gehen jeweils konusförmige Abschnitte aus, die in einen mittleren zylinderförmigen Abschnitt übergehen. Insgesamt ist die Spreizhülse hohl ausgebildet. Die Wand des zylinderförmigen Abschnittes der Spreizhülse besitzt in Achsrichtung verlaufende Schlitze 12. Zwischen den Schlitzen 12 bilden sich Spreizelemente 13 aus. Tritt die obere Stirnfläche der Spreizhülse 7 gegen das zweite Bauteil 3, so wird bei weiterem Drehen der Schraube 15 der das Innengewinde 21 ausbildende Abschnitt der Spreizhülse auf den die Durchgangsöffnung ausbildenden Abschnitt der Spreizhülse zu verlagert, dies ist verbunden mit einer radialen Auswölbung des zylinderförmigen Bereiches, wobei sich unter Aufspreizung der Schlitze 12 die Spreizelemente 13 gegen die Innenwandung der Einsteckhöhlung 6 anlegen, um dort reibschlüssig gehalten zu werden.

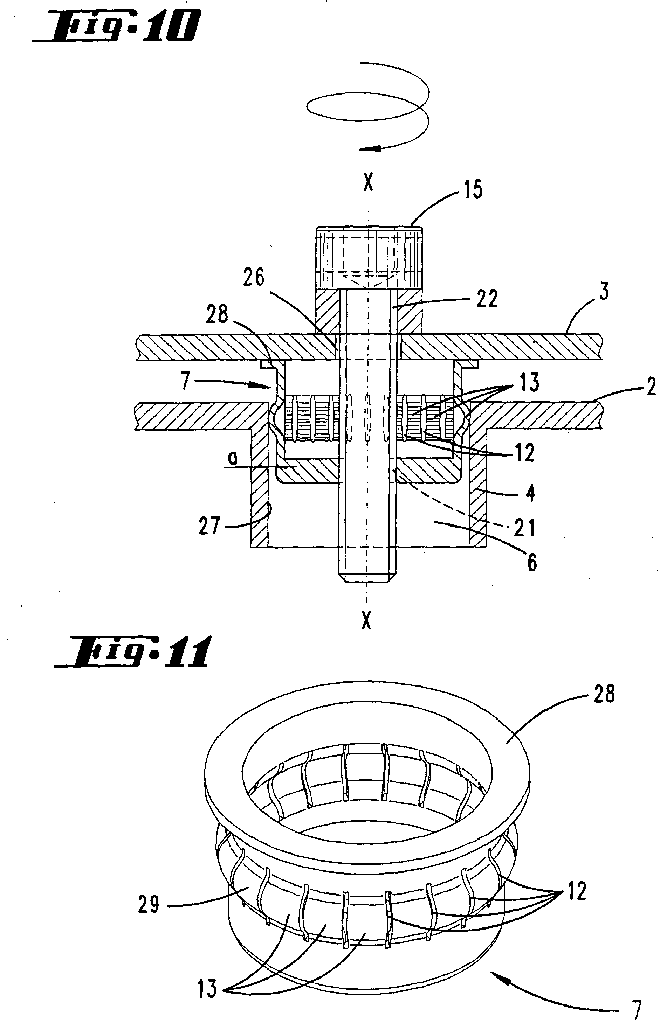

Das in den Fig. 10 und 11 dargestellte Ausführungsbeispiel ist ähnlich aufgebaut. Die Spreizhülse hat hier eine topfförmige Gestalt mit einem radialumlaufenden Kragen 28, der die an das Bauteil 3 sich anlegende Stirnfläche ausbildet. Von dem radialumlaufenden Kragen 28 erstreckt sich die Spreizhülse 7 zunächst zylinderförmig bis zu einem mittleren Wulst, der die Spreizzone ausbildet. Im Bereich dieses Wulstes besitzt die Spreizhülse eine Vielzahl von in Achsrichtung verlaufender Schlitze, zwischen welchen sich die Spreizelemente 13 befinden. Anschließend an den wulstförmigen Abschnitt setzt sich die Spreizhülse erneut zylindrisch fort. Sie hat hier einen Abstand a zur Innenwandung 27 der Einsteckhöhlung 6, so daß hier mit größeren Toleranzen gearbeitet werden kann. In den Darstellung der Ausführungsbeispiele liegen die beiden Bauteile 2, 3 in paralleler Ausrichtung zueinander. Der Abstand a bietet in Kombination mit dem wulstförmigen Klemmabschnitt die Möglichkeit, daß die Bauteile 2, 3 auch verkippt, also in einem Winkel miteinander verbunden werden können. Besonders eignet sich hierfür das nachfolgend beschriebene Ausführungsbeispiel, welches durch eine axial kurze Berührungsfläche zwischen Höhlung 4 und Wulstbereich 29 ausgezeichnet ist.

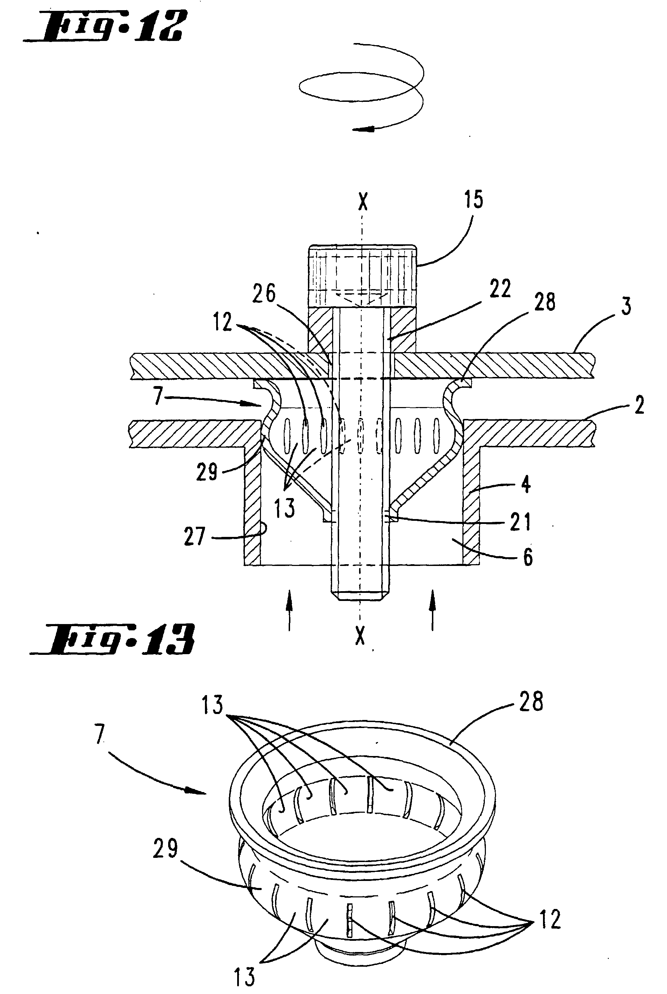

Das in den Fig. 12 und 13 dargestellte Ausführungsbeispiel besitzt ebenfalls eine Spreizhülse 7. Auch diese Spreizhülse tritt mit einem radialumlaufenden Kragen in Anlage an das zweite Bauteil 3. Diese Spreizhülse besitzt eine Glockenform mit im Kronenbereich angeordnetem Innengewinde 21. Vom Innengewinde 21 erstreckt sich die Spreizhülse konusförmig bis in den durchmessergrößten Wulstbereich 29, in welchem durch Axialschlitze 12 Spreizelemente 13 ausgebildet werden.

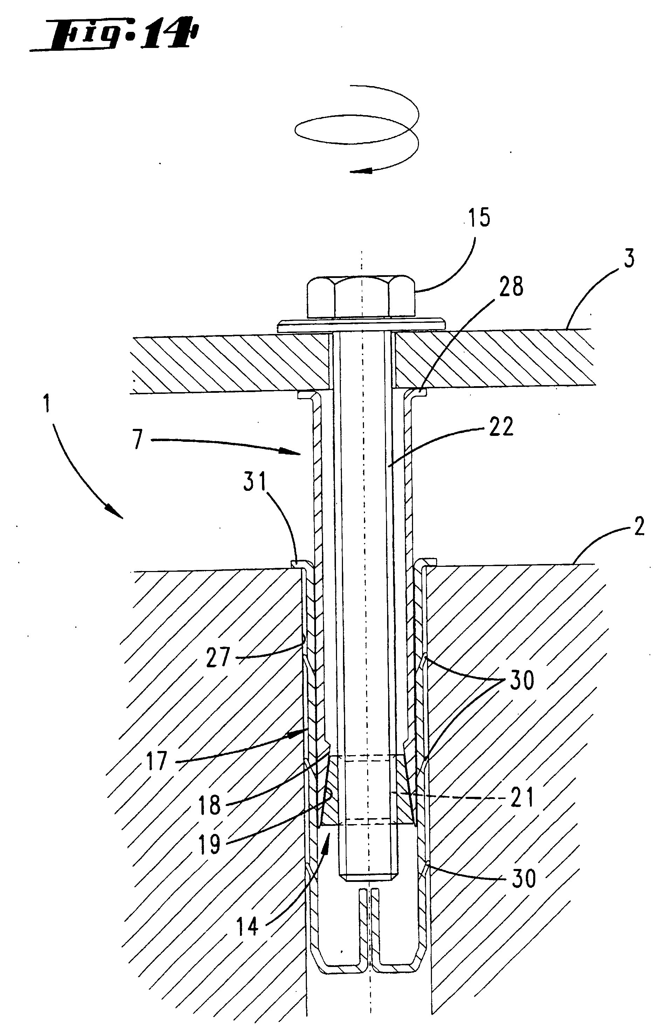

Das in der Fig. 14 dargestellte Ausführungsbeispiel zeigt eine Verbindungsvorrichtung in Form einer Bohrkonsole. Bei diesem Ausführungsbeispiel steckt das ebenfalls hülsenförmig aber langgestreckte Distanzstück 7 in einem Einsteckteil 17. Dieses Einsteckteil 17 besitzt ebenfalls Hülsenform und kann in einem Bohrloch einer Wandung oder dergleichen eingesteckt werden. Um eine vorläufige axiale und drehfeste Verbindung des Einsteckteiles 17 mit dem Bohrloch des ersten Bauteiles 2 zu gewährleisten, ragen von der Außenmantelfläche des Einsteckteiles 17 widerhakenförmige Profilnasen ab, die in klemmberührender Anlage zur Innenwandung der Bohrung im zweiten Bauteil treten.

In dem Einsteckteil 17 steckt drehgesichert, aber in Achsrichtung verlagerbar die Distanzhülse 7. Diese besitzt an ihrer Stirnfläche einen radialumlaufenden Kragen 28, der in der Montagestellung auf einem radialumlaufenden Kragen 31 des Einsteckteiles 17 liegt. Beim Drehen der Schraube 15 verlagert sich der endseitig im Distanzstück 7 steckende Spreizkörper 14 in Richtung auf das zweite Bauteil 3 zu, wobei das Distanzstück so lange mitgeschleppt wird, bis der Kragen 28 gegen das Bauteil 3 stößt. Sodann erfolgt eine Relativverlagerung des Spreizkörpers 14 des Distanzstücks 7, wobei die konische Mantelfläche 19 durch Aufgleiten auf der konischen Gegenfläche 18 die Spreizelemente gegen die Innenwandung des Einsteckteiles drückt. Dabei wird die Wandung des Einsteckteiles weiter nach außen gedrückt, so daß auch das Einsteckteil aufspreizt und in reibschlüssiger Anlage tritt gegen die Innenwandung der Bohrung im ersten Bauteil 2.

## Patentansprüche

1. Vorrichtung (1) zum verspannenden Verbinden von mit Abstand zueinander liegenden Bauteilen (2, 3) mittels eines im Abstandsraum angeordneten Distanzstücks (7) und eines die beiden Bauteile (2, 3) gegeneinander verspannenden Spannstückes (15), wobei die Befestigungsbetätigung des Spannstückes (15) zunächst das Distanzstück (7) von einer Beabstandungsstellung zu einer Anlagestellung zum zweiten Bauteil (3) verlagert und nachfolgend die Vorrichtung mittels gegen die Wandung einer Einsteckhöhlung (6) des ersten Bauteiles (2) tretenden Spreizelemente (13) am ersten Bauteil (2) festlegt, **dadurch gekennzeichnet, daß** die Spreizelemente (13) am Distanzstück (7) angeordnet sind.

2. Vorrichtung nach Anspruch 1,
**gekennzeichnet durch** einen bei der Befestigungsbetätigung in Richtung auf das zweite Bauteil (3) verlagerbaren Spreizkörper (14), welcher das eine Hülse ausbildende Distanzstück (7) von der Beabstandungsstellung in die Anlagestellung mitschleppt.

3. Vorrichtung nach einem oder mehreren der vorhergehenden Ansprüche, **dadurch gekennzeichnet, daß** die Hülse (7) mit in Achsrichtung verlaufenden Schlitzen (12) versehen ist, wobei die Schlitzzwischenräume die Spreizelemente (13) ausbilden.

4. Vorrichtung nach einem oder mehreren der vorhergehenden Ansprüche, **dadurch gekennzeichnet, daß** das Spannstück (15) eine Schraube oder ein Niet ist.

5. Vorrichtung nach einem oder mehreren der vorhergehenden Ansprüche, **dadurch gekennzeichnet, daß** das Distanzstück (7) drehfest aber in Achsrichtung gleitverschieblich in der Einsteckhöhlung (6) steckt.

6. Vorrichtung nach einem oder mehreren der vorhergehenden Ansprüche, **dadurch gekennzeichnet, daß** das Distanzstück (7) eine Spreizhülse ist.

7. Vorrichtung nach einem oder mehreren der vorhergehenden Ansprüche, **dadurch gekennzeichnet, daß** die Einsteckhöhlung (6) von einem fest mit dem ersten Bauteil verbundenen Rohrstück (4) ausgebildet wird.

8. Vorrichtung nach Anspruch 7, **dadurch gekennzeichnet, daß** das Rohrstück (4) von einer Einziehung ausgebildet ist.

9. Vorrichtung nach einem oder mehreren der vorhergehenden Ansprüche 7-8, **dadurch gekennzeichnet, daß** das Rohrstück (4) von einem aufspreizbaren Einsteckteil (17) ausgebildet wird.

10. Vorrichtung nach einem oder mehreren der vorhergehenden Ansprüche, **gekennzeichnet durch** vom Einsteckteil (17) radial abragende Vorsprünge (30) zur drehfesten und axialfesten Halterung des Einsteckteiles (17) in einem Bohrloch.

11. Vorrichtung nach einem oder mehreren der vorhergehenden Ansprüche, **dadurch gekennzeichnet, daß** die Drehsicherung von einer von der Einsteckhöhlung abragenden, in eine Nut (9) der Hülse (7) eingreifenden Nase (5) ausgebildet ist.

12. Vorrichtung nach einem oder mehreren der vorhergehenden Ansprüche 2-10, **dadurch gekennzeichnet, daß** der Spreizkörper (14) zufolge eines in einer Nut (25) der Hülse (7) eingreifenden Stiftes (23) drehfest in der Hülse (7) sitzt.

13. Vorrichtung nach einem oder mehreren der vorhergehenden Ansprüche 2-10, **dadurch gekennzeichnet, daß** der Spreizkörper (14) eine konische Mantelfläche (19) ausbildet, welche in Anlage tritt zu einer konischen Gegenfläche (18) der Hülse (7).

14. Vorrichtung nach einem oder mehreren der vorhergehenden Ansprüche 12-13, **gekennzeichnet dadurch, daß** der Stift (23) den Spreizkörper (14) an die Hülse (7) fesselt.

15. Vorrichtung nach einem oder mehreren der vorhergehenden Ansprüche, **gekennzeichnet dadurch, daß** das Gegengewinde (21, 32) der Spannschraube entweder dem zweiten Bauteil (3) oder dem Spreizkörper (14) zugeordnet ist.

16. Vorrichtung nach einem oder mehreren der vorhergehenden Ansprüche, **gekennzeichnet dadurch, daß** das Distanzstück (7) einen zweiten, dem ersten Spreizkörper (14) gegenüberliegend angeordneten Spreizkörper (33) aufweist, mit welchen es in Anlagestellung zum zweiten Bauteil (3) tritt.

17. Vorrichtung nach Anspruch 16, **gekennzeichnet dadurch, daß** sich das Distanzstück (7) nach dem in Anlagetreten zum zweiten Bauteil (3) durch Erhöhen der Spannkraft abstandsmindernd verformt.

18. Vorrichtung nach einem oder mehreren der vorhergehenden Ansprüche 2-17, **gekennzeichnet dadurch, daß** die im wesentlichen zylindrische Hülsenwandung (8) umfangsgeriffelt (16) ist.

19. Vorrichtung nach einem oder mehreren der vorhergehenden Ansprüche 2-18, **gekennzeichnet durch** von beiden Stirnseiten der Hülse ausgehende, sich abwechselnde und sich in Achsrichtung längenüberlappende Schlitze (12, 25).

## Claims

1. A device (1) for connecting components (2, 3) which lie at a spacing from one another by clamping by means of a spacer (7), which is disposed in the spacing region, and a clamping piece (15) which clamps the two components (2, 3) with respect to one another, the securing actuation of the clamping piece (15) initially displacing the spacer (7) from a spaced position to a bearing position with respect to the second component (3) and then fixing the device to the first component (2) by means of spreading elements (13) which move into engagement against the wall of an insertion cavity (6) of the first component (2), **characterized in that** the spreading elements (13) are located at the spacer (7).

2. Device according to Claim 1, **characterized by** a spreading body (14) which can be displaced toward the second component (3) during the securing actuation and which drags with it the spacer (7), which forms a sleeve, from the spaced position into the bearing position.

3. Device according to one or more of the preceding claims, **characterized in that** the sleeve (7) is provided with slots (12) which extend in the axial direction, the slot interspaces forming the spreading elements (13).

4. Device according to one or more of the preceding claims, **characterized in that** the clamping piece (15) is a bolt or a rivet.

5. Device according to one or more of the preceding claims, **characterized in that** the spacer (7) fits in the insertion cavity (6) in such a manner that it is rotationally fixed but slidably displaceable in the axial direction.

6. Device according to one or more of the preceding claims, **characterized in that** the spacer (7) is a spreading sleeve.

7. Device according to one or more of the preceding claims, **characterized in that** the insertion cavity (6) is formed by a piece of tube (4) which is fixedly connected to the first component.

8. Device according to Claim 7, **characterized in that** the piece of tube (4) is formed by a drawn-in section.

9. Device according to one or more of the preceding Claims 7-8, **characterized in that** the piece of tube (4) is formed by an insertion part (17) which can be spread open.

10. Device according to one or more of the preceding claims, **characterized by** protuberances (30) which project radially from the insertion part (17), for holding the insertion part (17) in a rotationally and axially fixed manner in a drilled hole.

11. Device according to one or more of the preceding claims, **characterized in that** the rotational securing is formed by a lug (5) which projects from the insertion cavity and engages in a groove (9) in the sleeve (7).

12. Device according to one or more of the preceding Claims 2-10, **characterized in that** the spreading body (14), on account of a pin (23) which engages in a groove (25) in the sleeve (7), is seated in a rotationally fixed manner in the sleeve (7).

13. Device according to one or more of the preceding Claims 2-10, **characterized in that** the spreading body (14) forms a conical lateral surface (19) which comes to bear against a conical mating surface (18) of the sleeve (7).

14. Device according to one or more of the preceding Claims 12-13, **characterized in that** the pin (23) holds the spreading body (14) on the sleeve (7).

15. Device according to one or more of the preceding claims, **characterized in that** the mating thread (21, 32) of the clamping bolt is associated either with the second component (3) or with the spreading body (14).

16. Device according to one or more of the preceding claims, **characterized in that** the spacer (7) has a second spreading body (33), which is arranged opposite the first spreading body (14) and by means of which it comes to bear against the second component (3).

17. Device according to Claim 16, **characterized in that** the spacer (7), after coming into contact with the second component (3), is deformed, in such a manner as to reduce the spacing, by increasing the clamping force.

18. Device according to one or more of the preceding Claims 2-17, **characterized in that** the substantially cylindrical sleeve wall (8) (sic) is circumferentially fluted (16).

19. Device according to one or more of the preceding Claims 2-18, **characterized by** slots (12, 25) which start from both end sides of the sleeve, alternate with one another and overlap one another in terms of length in the axial direction.

## Revendications

1. Dispositif (1) pour assembler par serrage des composants (2, 3) espacés l'un de l'autre au moyen d'une pièce d'écartement (7) disposée dans l'espace d'écartement et d'une pièce de serrage (15) serrant les deux composants (2, 3) l'un contre l'autre, l'actionnement de fixation de la pièce de serrage (15) déplaçant d'abord la pièce d'écartement (7) d'une position d'espacement vers une position de plaquage par rapport au deuxième composant (3) et fixant ensuite le dispositif sur le premier composant (2) au moyen d'éléments d'expansion (13) s'appuyant contre la paroi d'un creux d'insertion (6) du premier composant (2), **caractérisé en ce que** les éléments d'expansion (13) sont associés à la pièce d'écartement (7).

2. Dispositif selon revendication 1, **caractérisé par** un corps d'expansion (14) pouvant être déplacé en direction du deuxième composant (3) lors de l'actionnement de fixation, lequel corps d'expansion entraîne la pièce d'écartement (7) formant un manchon depuis la position d'écartement vers la position de plaquage.

3. Dispositif selon l'une ou plusieurs des revendications précédentes, **caractérisé en ce que** le manchon (7) est doté de fentes (12) s'étendant dans le sens axial, les espaces entre les fentes constituant les éléments d'expansion (13).

4. Dispositif selon l'une ou plusieurs des revendications précédentes, **caractérisé en ce que** la pièce de serrage (15) est une vis ou un rivet.

5. Dispositif selon l'une ou plusieurs des revendications précédentes, **caractérisé en ce que** la pièce d'écartement (7) s'insère dans le creux d'insertion de manière à ne pas tourner mais à pouvoir glisser dans le sens axial.

6. Dispositif selon l'une ou plusieurs des revendications précédentes, **caractérisé en ce que** la pièce d'écartement (7) est une coquille d'expansion.

7. Dispositif selon l'une ou plusieurs des revendications précédentes, **caractérisé en ce que** le creux d'insertion (6) est constitué d'une pièce tubulaire (4) reliée fermement au premier composant.

8. Dispositif selon revendication 7, **caractérisé en ce que** la pièce tubulaire (4) est constituée d'un retrait.

9. Dispositif selon l'une ou plusieurs des revendications 7 à 8, **caractérisé en ce que** la pièce tubulaire (4) est constituée d'une pièce d'insertion (17) expansible.

10. Dispositif selon l'une ou plusieurs des revendications précédentes, **caractérisé par** des saillies (30), dépassant radialement de la pièce d'insertion (17) pour la fixation de la pièce d'insertion (17) dans un forage de manière à ce qu'elle ne tourne pas et qu'elle soit axialement fixe.

11. Dispositif selon l'une ou plusieurs des revendications précédentes, **caractérisé en ce que** la sécurité anti-rotation est constituée d'un nez (5) dépassant du creux d'insertion et pénétrant dans une rainure (9) du manchon (7).

12. Dispositif selon l'une ou plusieurs des revendications 2 à 10, **caractérisé en ce que** le corps d'expansion (14) se trouve dans le manchon (7) bloqué en rotation à la suite d'une tige (23) pénétrant dans une rainure (25) du manchon (7).

13. Dispositif selon l'une ou plusieurs des revendications 2 à 10, **caractérisé en ce que** le corps d'expansion (14) constitue une surface enveloppante (19) conique qui, en position, vient en contact d'une contre-surface (18) conique du manchon (7).

14. Dispositif selon l'une ou plusieurs des revendications 2 à 13, **caractérisé en ce que** la tige (23) fixe le corps d'expansion (14) au manchon (7).

15. Dispositif selon l'une ou plusieurs des revendications précédentes, **caractérisé en ce que** le contre-filet (21, 32) de la vis de serrage est associé soit au deuxième composant (3) soit au corps d'expansion (14).

16. Dispositif selon l'une ou plusieurs des revendications précédentes, **caractérisé en ce que** la pièce d'écartement (7) présente un deuxième corps d'expansion (33) disposé en face du premier corps d'expansion (14), avec lesquels elle vient en position de plaquage par rapport au deuxième composant (3).

17. Dispositif selon revendication 16, **caractérisé en ce que** la pièce d'écartement (7) se déforme, en réduisant la distance, après le plaquage par rapport au deuxième composant (3) du fait de l'augmentation de la force de serrage.

18. Dispositif selon l'une ou plusieurs des revendications 2 à 17, **caractérisé en ce que** la paroi essentiellement cylindrique du manchon (8) est striée à la périphérie (16).

19. Dispositif selon l'une ou plusieurs des revendications 2 à 18, **caractérisé par** des fentes (12, 25) partant des deux faces avant du manchon, alternantes et se chevauchant longitudinalement dans le sens axial.
